# EUROPEAN PATENT SPECIFICATION

(11) **EP 4 611 538 B1**
(45) Date of publication and mention of the grant of the patent: **02.09.2026**
(21) Application number: 23800744.7
(22) Date of filing: 24.10.2023
(51) Int. Cl.: B01F 25/82, B01F 35/83, A01K 61/80, B01F 35/71

(54) **A FEED DISPENSER FOR FEEDING FISH**
FUTTERSPENDER ZUM FÜTTERN VON FISCHEN
DISTRIBUTEUR D'ALIMENTS POUR ALIMENTER DES POISSONS

(30) Priority: 31.10.2022 DK PA202200989
(43) Date of publication of application: 10.09.2025
(73) Proprietor: Andersen Steel Company ApS, 6040 Egtved (DK)
(72) Inventor: LUND, Bjarke, 6823 Ansager (DK); ANDERSEN, Christian, 6040 Egtved (DK)
(74) Representative: Rasmussen, Martin Hoffgaard
(86) International application number: PCT/DK2023/050254
(87) International publication number: WO 2024/094260

(56) References cited:
- EP-B1- 0 438 024
- CN-U- 206 808 437
- US-A- 3 677 230

## Description

### Field of the invention

The present invention generally relates to a feed dispenser for using for feeding fish in a fish farm.

More specifically, the present invention relates in a first aspect to a dispenser for dispensing a mixture of two types of granular fish feed in a predetermined relative proportion.

In a second aspect the present invention relates to a use of the dispenser according to the first aspect of the present invention for feeding fish.

In a third aspect the present invention relates to a method for feeding fish by using the dispenser according to the first aspect of the present invention.

### Background of the invention

Fish farms have been known for decades as an alternative way of providing fish for consumption, as compared to providing wild fish from seawater or fresh water habitats.

Fish farms usually comprises a plurality of basins of various sizes intended for keeping a specific species of fish having a specific size range.

Accordingly, the breeding of fish in fish farms involves that a plurality of individual fish of a specific species are kept together from the larvae stadium to the point in their growth where they are ready for sale.

Breeding the fish in this way implies a number of advantages. First, keeping fish of the same sizes together avoids the risk that relative larger fish will hunt and consume relative smaller fish. Moreover, as the fish being held together essentially are of the same species and size, no sorting need be performed during their growth.

Finally, fish in fish farms are generally being fed with a granular feed and as fish of various sizes need different types of fish feed, both in terms of the granular size of the feed pellets and in terms of nutritional content of the feed pellets, it is advantageous to breed the fish in basins containing only fish of same species and essentially same size range.

As to feeding fish in fish farms, various types of feeding dispensers are known. Some types of feeding dispensers are electronically controlled with a timer and a dispensing mechanism. Another type of feeding dispensers is purely mechanical. One such type of feed dispensers comprise a downwardly tapered container for storing granular feed. The container is arranged above the water of a fish basin. In a lower end of the container an opening is present. A pendulum is being suspended outside the container and the pendulum comprises an upper retaining plate that at the outside of the container is arranged a few millimeters below the bottom opening of the container. The pendulum is suspended in such a way that it is allowed to pivot a few degrees back and forth, and in this pivoting movement, the retaining plate also performs a movement and thereby makes it possible for the feed pellets to be dispensed from the container and into the water below.

The pivoting movement of the pendulum is brought about by movement in the water, such as imparted by the fish, or by effected by fish which deliberately punch the pendulum so as to dispense fish feed.

This pendulum type of feed dispenser is known from the literature, cf. US 3 730 142. Variation of the same principle are known from US 4 270 489 and US 3 688 743.

Although these purely mechanical feed dispensers have proven extremely reliable in operation and requires little maintenance, they nevertheless represent some disadvantages.

One of these disadvantages is that the container only comprises one room. This has the consequence that as the fish grows in size and requires different type of nutrition and different pellet size of the granular fish feed, the container will have to be emptied and reloaded with the new type of feed. Such exchange operation of the feed is cumbersome and time consuming.

Accordingly, a need persists for an improved feeding dispenser that overcomes this disadvantage.

CN 206 808 437 U discloses a dispenser for dispensing a mixture of two types of granular fish feed in a predetermined relative proportion, said dispenser comprises a container for storing fish feed, a dispensing pendulum for effecting the dosing of said fish feed, and a pendulum suspension for suspending said pendulum, wherein said container comprises a first compartment and a second compartment, wherein said first compartment and said second compartment, at least at an upper portion thereof, are being separated by a partitioning wall having an extension in a vertical direction, wherein said first compartment is being tapered in a downward direction and wherein said second compartment is being tapered in a downward direction, wherein said dispensing pendulum comprises a vertically extending rod and a retaining plate arranged at an upper portion thereof, and wherein said dispensing pendulum is being coupled to said pendulum suspension in such a way that said retaining plate of said dispensing pendulum is being arranged below said dispensing opening outside said container, and in a way enabling said dispensing pendulum to perform a pivoting movement when being acted upon by an external force.

It is an objective of the present invention to provide improvements within the technology of fish feeding dispenser.

### Brief description of the invention

This objective is fulfilled according to the present invention in its various aspects.

Accordingly, the present invention relates in a first aspect defined in claim 1 to a dispenser for dispensing a mixture of two types of granular fish feed in a predetermined relative proportion; wherein said dispenser in the orientation intended during use comprising:
- a container for storing fish feed;
- a dispensing pendulum for effecting the dosing of said fish feed;
- a pendulum suspension for suspending said pendulum;

wherein said container comprises a first compartment and a second compartment, wherein
said first compartment and said second compartment, at least at an upper portion thereof, are being separated by a partitioning wall having an extension in a vertical direction;
wherein said first compartment is being tapered in a downward direction and wherein said second compartment is being tapered in a downward direction;
wherein said partitioning wall comprises a partitioning tube having an extension in a vertical direction;
wherein said container at a position below said partitioning tube thereof comprises a dispensing opening for dispensing fish feed out of said container from said first compartment and said second compartment in a downward direction;
wherein said partitioning tube is having an extension in a downward direction in such a way that a passageway from said first compartment to said dispensing opening is provided and in such a way that a passageway from said second compartment to said dispensing opening is provided;
wherein said dispensing pendulum comprises a vertically extending rod and a retaining plate arranged at an upper portion thereof;
wherein said dispensing pendulum is being coupled to said pendulum suspension in such a way that said retaining plate of said dispensing pendulum is being arranged below said dispensing opening outside said container, and in a way enabling said dispensing pendulum to perform a pivoting movement when being acted upon by an external force;
wherein said dispenser comprises a first dosing piston and a second dosing piston, wherein said first dosing piston and said second dosing piston are being accommodated in the interior of said partitioning tube in an orientation parallel to each other;
wherein the dimensions and geometries of said partitioning tube and of said first dosing piston are adapted to each other in such a way that varying the vertical position of said first dosing piston relative to said partitioning tube will vary the magnitude of the passageway from said first compartment to said dispensing opening;
wherein the dimensions and geometries of said partitioning tube and of said second dosing piston are adapted to each other in such a way that varying the vertical position of said second dosing piston relative to said partitioning tube will vary the magnitude of the passageway from said second compartment to said dispensing opening.

In a second aspect defined in claim 12 the present invention provides a use of a dispenser according to first aspect of the invention for feeding fish.

In a third aspect defined in claim 14 the present invention provides a method for feeding fish, such as fish in a fish farm, said method comprising the following steps:
i) providing a dispenser according to the first aspect of the invention;
ii) arranging the dispenser above water in the fish farm in which fish are to be fed in such a way that a lower part of said dispensing pendulum is being submerged in the water;
iii) adding a first type of granular fish feed in said first compartment of said dispenser and adding a second type of granular fish feed in said second compartment of said dispenser;
iv) allowing said granular fish feed to be fed to the fish upon movement of said dispensing pendulum.

The present invention in its various aspects allows a gradually change of nutritional composition and pellet size of granular fish feed to be fed to fish in a fish farm.

Such gradually change makes it possible in an easy way to optimize the type of feed being fed to fish in a fish farm as the fish grow in size, depending of a present size range of the fish.

### Brief description of the figures

Fig. 1 is a perspective view illustrating the dispenser according to the present invention.
Fig. 2 is a perspective view illustrating a container of the dispenser according to the present invention.
Fig. 3 is a perspective view illustrating a dosing piston to be used with the dispenser according to the present invention.
Fig. 4 is a cross-sectional view illustrating the dispenser according to the present invention.
Fig. 5 is a close-up perspective view illustrating the suspension of the dispensing pendulum on the pendulum suspension according to one embodiment of the present invention.
Fig. 6a is a perspective view illustrating a pendulum suspension to be used with the dispenser according to the present invention.
Fig. 6b is a perspective view illustrating a dispensing pendulum to be used with the dispenser according to the present invention.
Fig. 7 is a close-up view illustrating the arrangement of the first dosing piston and the second dosing piston in the partitioning tube of the container of the dispenser according to the present invention.

### Detailed description of the invention

### The first aspect of the present invention

The present invention relates in a first aspect to a dispenser 100 for dispensing a mixture of two types of granular fish feed in a predetermined relative proportion;
wherein said dispenser in the orientation intended during use comprising:
   - a container 2 for storing fish feed;
   - a dispensing pendulum 4 for effecting the dosing of said fish feed;
   - a pendulum suspension 6 for suspending said pendulum 4;
wherein said container 2 comprises a first compartment 8 and a second compartment 10, wherein said first compartment and said second compartment, at least at an upper portion thereof, are being separated by a partitioning wall 12 having an extension in a vertical direction;
wherein said first compartment 8 is being tapered in a downward direction and wherein said second compartment 10 is being tapered in a downward direction;
wherein said partitioning wall 12 comprises a partitioning tube 14 having an extension in a vertical direction;
wherein said container 2 at a position below said partitioning tube 14 thereof comprises a dispensing opening 16 for dispensing fish feed out of said container from said first compartment 8 and said second compartment 10 in a downward direction;
wherein said partitioning tube 14 is having an extension in a downward direction in such a way that a passageway 18a from said first compartment 8 to said dispensing opening 16 is provided and in such a way that a passageway 18b from said second compartment 10 to said dispensing opening 16 is provided;
wherein said dispensing pendulum 4 comprises a vertically extending rod 20 and a retaining plate 22 arranged at an upper portion thereof;
wherein said dispensing pendulum 4 is being coupled to said pendulum suspension in such a way that said retaining plate 22 of said dispensing pendulum is being arranged below said dispensing opening 16 outside said container 2, and in a way enabling said dispensing pendulum 4 to perform a pivoting movement when being acted upon by an external force;
wherein said dispenser comprises a first dosing piston 24 and a second dosing piston 26, wherein said first dosing piston and said second dosing piston are being accommodated in the interior of said partitioning tube 14 in an orientation parallel to each other;
wherein the dimensions and geometries of said partitioning tube 14 and of said first dosing piston 24 are adapted to each other in such a way that varying the vertical position of said first dosing piston relative to said partitioning tube will vary the magnitude of the passageway 18a from said first compartment 8 to said dispensing opening 16;
wherein the dimensions and geometries of said partitioning tube 14 and of said second dosing piston 26 are adapted to each other in such a way that varying the vertical position of said second dosing piston 26 relative to said partitioning tube 14 will vary the magnitude of the passageway 18b from said second compartment 10 to said dispensing opening 16.

Accordingly, the dispenser of the first aspect of the present invention allows for accommodating in each respective compartment 8,10, two different types or gain sizes of a granular fish feed and furthermore allows for adjusting the mutual proportion of these two different types or gain sizes of the fish feed upon dispensing thereof which is brought about by movement of the dispensing pendulum 4 in the water comprising the fish.

In an embodiment of the dispenser 100 according to the first aspect of the present invention, the partitioning tube 14 in the interior thereof comprises a vertically extending tube wall 28 dividing the interior of said partitioning tube into a first inner portion 30 and a second inner portion 32; wherein the geometry and dimensions of said first inner portion 30 of said partitioning tube 14 and the geometry and dimensions of said first dosing piston 24 are adapted to each other in such a way that said first dosing piston is being accommodated in said first inner portion 30 of said partitioning tube 14; and wherein the geometry and dimensions of said second inner portion 32 of said partitioning tube 14 and the geometry and dimensions of said second dosing piston 26 are adapted to each other in such a way that said second dosing piston is being accommodated in said second inner portion 32 of said partitioning tube 14.

The presence of such a tube wall will make it easier to arrange and adjust the dosing pistions 24,26 in relation to each other.

In an embodiment of the dispenser 100 according to the first aspect of the present invention, the dispensing opening 16 is comprising a tube segment 34 for receiving a lower portion 36a,36b of said first dosing piston 24 and said second dosing piston 26, respectively.

Hereby the lower portion 36a,36b of said first dosing piston 24 and said second dosing piston 26 will be supported in the tube segment.

In an embodiment of the dispenser 100 according to the first aspect of the present invention, the tube segment 34 is having a cross section corresponding to the cross section of said partitioning tube 14, and wherein said tube segment 34 of said dispensing opening 16 is being arranged directly below said partitioning tube 14.

In an embodiment of the dispenser 100 according to the first aspect of the present invention the size of said retaining plate 22 of said dispensing pendulum 4 is sufficient large to cover said dispensing opening 16.

Hereby is ensured that the retaining plate 22 will be able to prevent dispensing of granular feed, when the dispensing pendulum is not being moved and is arranged in a vertical orientation.

In an embodiment of the dispenser 100 according to the first aspect of the present invention the pendulum suspension 6 comprises a vertically extending rod 38 having a 90° bend at a lower portion, thereby forming a horizontally extending lower end 40, wherein said horizontally extending lower end of said pendulum suspension comprises a holding element 42 for holding said dispensing pendulum 4.

In one embodiment the holding element 42 of the horizontally extending lower end 40 of said pendulum suspension 6 comprises a downward bend 44 followed by an upward bend 46.

In one embodiment, the dispensing pendulum 4 at a position below said retaining plate 22 comprises a ring 48 having a through-going opening 50, and wherein said holding element 42 of said pendulum suspension 6 is configured for suspending said dispensing pendulum 4 by making said through-going opening 50 of said ring 48 rest on said holding element 42 of said horizontally extending lower end 40 of said pendulum suspension 6.

In one embodiment the partitioning wall 12 of said container 2 comprises a first guide member 52 for holding in place the orientation of said vertically extending rod 38 of said pendulum suspension 6.

In one embodiment the pendulum suspension comprises a guide arm 54 which is being connected to said vertically extending rod 38 and extending essentially parallel therewith in an upward direction, and wherein said dispenser comprises a second guide member 56 for holding in place the orientation of said guide arm 54 of said pendulum suspension 6.

The above embodiments relating to the dispensing pendulum and its suspension provides a simple and reliable design.

In an embodiment of the dispenser 100 according to the first aspect of the present invention the dispenser comprises dosage adjustment means 58 for adjusting the vertical position of said pendulum suspension 6 relative to said dispensing opening 16, wherein said dosage adjustment means 58 optionally also comprises locking means for locking the vertical position of said pendulum suspension 6 relative to said dispensing opening 16.

This feature allows adjustment of the magnitude of the amount of feed to be dispensed, in response to a given movement of the dispensing pendulum.

In an embodiment of the dispenser 100 according to the first aspect of the present invention the dispenser comprises a first locking means 60 for locking the vertical position of the first dosing piston 24 relative to the partitioning tube 14; and/or the dispenser comprises a second locking means 62 for locking the vertical position of the second dosing piston 26 relative to said partitioning tube 14.

Hereby the relative positions of the first dosing piston 24 and the second dosing piston 26 can be locked in a fixed position.

In an embodiment of the dispenser 100 according to the first aspect of the present invention the cross-section of the interior of said partitioning tube 14 is having a circular shape, and the cross-section of the first dosing piston 24 and/or the cross-section the second dosing piston 26 is/are having the shape of a semicircle.

In an embodiment and in respect of a predetermined part of the lower end of the first dosing piston 24 and/or of the second dosing piston 26, the first dosing piston 24 and/or the second dosing piston 26 comprises a cutaway 63 of part of the cylindrical surface of the outer surface thereof.

Such cutaway ensures an adequate magnitude of passage from the first or second compartment 8,10 to the dispensing opening 16.

In an embodiment of the dispenser 100 according to the first aspect of the present invention the lowest end 64 of said dispensing pendulum 4 comprises an end element 65 for providing increased volume to said lowest end.

Hereby it will be easier for the fish to be fed to effect movement of the dispensing pendulum in order to dispense granular feed from that dispenser.

In an embodiment of the dispenser 100 according to the first aspect of the present invention the extension, in a downward direction, of said partitioning wall 12 and of said partitioning tube 14 are configured in such a way that a passage 66 between the first compartment 8 and said second compartment 10 is being present below the partitioning wall 12 and below the partitioning tube 14.

In an embodiment of the dispenser 100 according to the first aspect of the present invention first dosing piston 24 and/or said second dosing piston 26 is/are comprising a handle 68 at its upper end.

Hereby adjustment of the vertical position of these dosing pistons is made easy.

In an embodiment of the dispenser 100 according to the first aspect of the present invention the dispensing opening 16 of said container 2 is being arranged at the area of the lowest portion of the first compartment 8 and of said second compartment 10.

Hereby it will be easy to fully empty the container comprising the first compartment 8 and the second compartment 10 from the feed contained therein, whenever needed.

In an embodiment of the dispenser 100 according to the first aspect of the present invention the container 2 comprises a lid 70.

Hereby any contaminants from the outside environment can be prevented from entering the interior of the container of the dispenser.

In an embodiment of the dispenser 100 according to the first aspect of the present invention the container 2 is having an inner volume of 50 - 1200 1 or more, such as 75 - 1100 1, such as 100 - 1000 1, for example 200 - 900 1, e.g. 300 - 800 1, such as 400 - 700 1 or 500 - 600 1.

These magnitudes of volume of the container ensures that a suitable amount of fish feed can be accommodated in the container.

### The second aspect of the present invention

In a second aspect the present invention provides a use of a dispenser 100 according to the first aspect of the present invention for feeding fish.

In an embodiment of the use according to the second aspect of the present invention the use relates to a use in a fish farm.

### The third aspect of the present invention

In a third aspect the present invention provides a method for feeding fish, such as fish in a fish farm, said method comprising the following steps:
i) providing a dispenser 100 according to the first aspect of the invention;
ii) arranging the dispenser 100 above water in the fish farm in which fish are to be fed in such a way that a lower part of said dispensing pendulum 4 is being submerged in the water;
iii) adding a first type of granular fish feed in said first compartment 8 of said dispenser and adding a second type of granular fish feed in said second compartment 10 of said dispenser;
iv) allowing said granular fish feed to be fed to the fish upon movement of said dispensing pendulum 4.

In an embodiment of method according to the third aspect of the present invention the method further comprising one or more of the additionally steps:
v) adjusting the vertical position of the pendulum suspension 6 in order to adjust the amount of feed to be fed to the fish; and/or
vi) adjusting the vertical position of said first dosing piston 24 relative to said partitioning tube 14 and/or adjusting the vertical position of said second dosing piston 26 relative to said partitioning tube 14 in order to adjust the proportion between the first type of feed and the second type of feed which are to be fed to said fish.

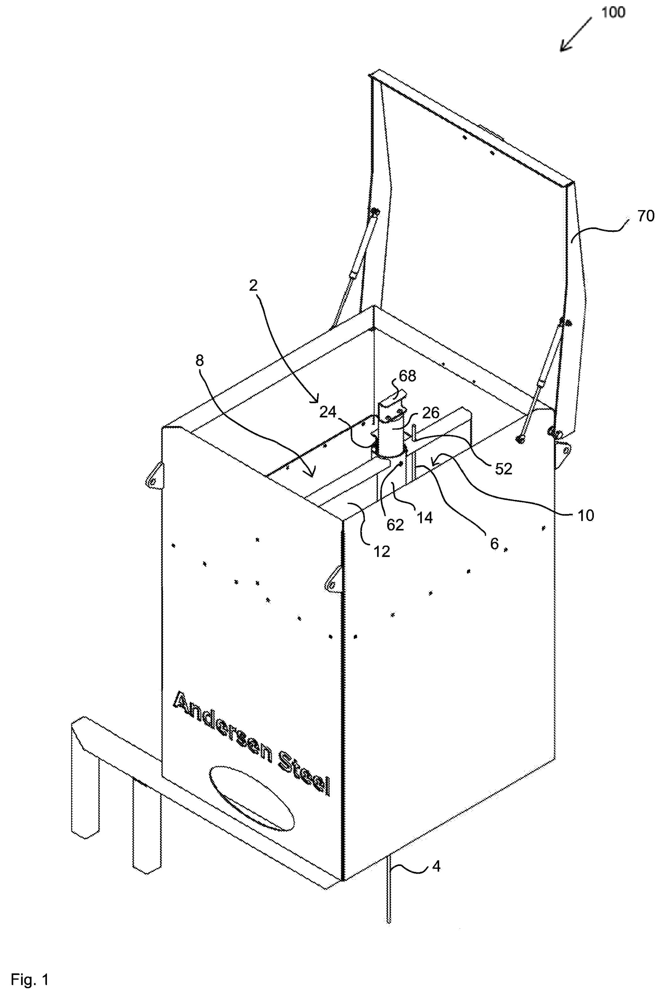

Referring now to the figures, in order to better illustrating the present invention, Fig. 1 is a perspective view illustrating the dispenser according to the present invention.

Fig. 1 shows 1 the dispenser 100 for dispensing a mixture of two types of granular fish feed. The dispenser allows for dispensing such two types of granular fish feed in a predetermined relative proportion.

The dispenser in the orientation intended during use comprises a container 2 for storing the fish feed.

The container 2 is divided at an upper part thereof into a first compartment 8 and a second compartment 10 by a partitioning wall 12.

Part of the partitioning wall 12 comprises a partitioning tube 14 into which a first dosing piston 24 and a second dosing piston 26 are arranged in a parallel arrangement.

As explained further below the vertical position of each of the first dosing piston 24 and the second dosing piston 26, relative to the partitioning tube 14, will allow adjustment of the relative proportion of a first type of granular feed accommodated in the first compartment 8 of the container 2 and of a second type of granular feed accommodated in the second compartment 10 of the container 2, when being dispensed from the dispenser 100.

As seen the dispenser 100 comprises a lid 70 for sealing off the interior of the container from the surroundings.

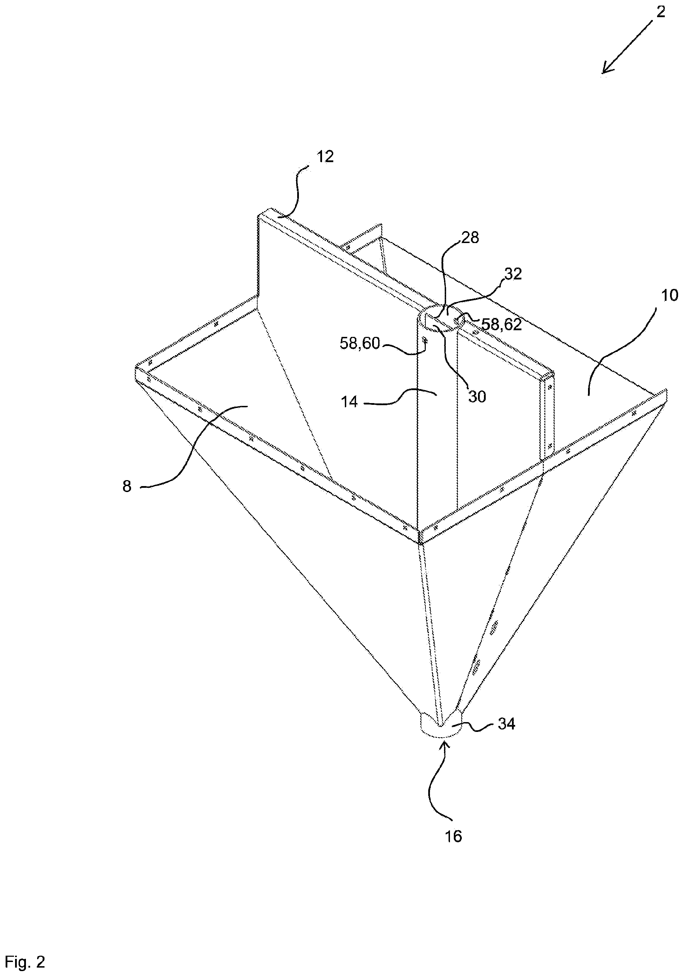

Fig. 2 is a perspective view illustrating the container to be used with the dispenser according to the present invention.

Fig 2 shows the container 2 comprising the first compartment 8 and the second compartment 10 which are being separated by the partitioning wall 12 comprising the partitioning tube 14. The partitioning tube 14 in its interior comprises an axially arranged and vertically extending tube wall 28. The tube wall 28 makes it easier to adjust the vertical position of the first dosing piston 8 and the second dosing piston 10 in the partitioning tube 14.

The cross-section of the interior of the partitioning tube 14 is having a circular shape.

It is seen in Fig. 2 that the first compartment 8 is being tapered in a downward direction and that the second compartment 10 is being tapered in a downward direction. The lower area of the first compartment 8 and of the second compartment 10 end in a dispensing opening 16 for dispensing the fish feed in a downward direction. A tube segment 34 is arranged at this dispensing opening below the partition tube 14.

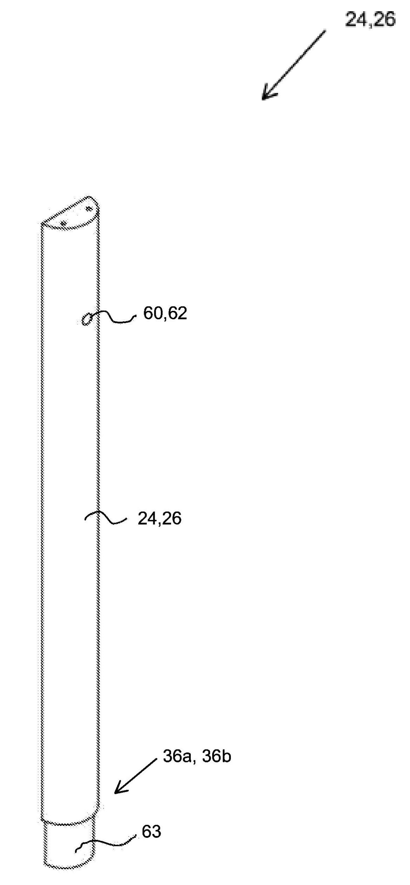

Fig. 3 is a perspective view illustrating a dosing piston to be used with the dispenser according to the present invention.

Fig. 3 shows a dosing piston which could be either the first dosing piston 24 or the second dosing piston 26. Two of such dosing pistons are to be arranged in the interior of the partitioning tube 14.

The cross-section of the first dosing piston 24,26 is having the shape of a semicircle. Hereby, two such dosing piston can be accommodated side-by-side in a partitioning tube 14 having a circular inner cross-section.

It is seen in Fig. 3 that part of the lower end 36a,36b of the dosing piston 24,26 comprises a cutaway 63 of part of the cylindrical surface of the outer surface thereof. Such cutaway improves conveying fish feed trough the space between the partitioning tube and side the first or second compartment 8,10 upon dispensing of fish feed.

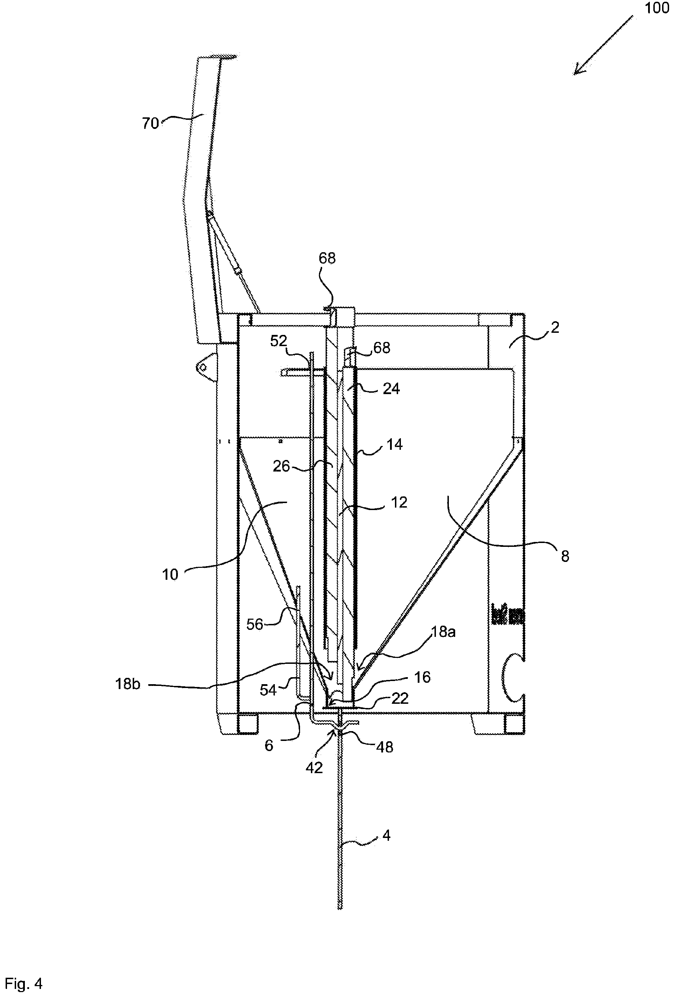

Fig. 4 is a cross-sectional view illustrating the dispenser according to the present invention.

Fig. 4 shows the container 2 comprising the first compartment 8 and the second compartment 10 being partitioned by the partition wall 12 and the partitioning tube 14. It is seen that a first dosing piston 24 and a second dosing piston 26 are being arranged side-by-side in the interior of the partitioning tube 14.

Fig. 4 also shows that the tapered lower end of the first compartment 8 and the second compartment 10 end in a downward direction in a dispensing opening 16.

Fig. 4 also shows that the partitioning tube 14 is having an extension in a downward direction in such a way that a passageway 18a is provided from the first compartment 8 to the dispensing opening 16 and in such a way that a passageway 18b is provided from the second compartment 10 to the dispensing opening 16.

Finally, Fig. 4 shows that dispensing opening 16 is being covered by a retaining plate 22 which is arranged on an upper end of a vertically extending rod 20 of the dispensing pendulum 4 and that the dispensing pendulum 4 is suspended on the pendulum suspension 6. The retaining plate 22 prevents an immediate dispensing of all the fish feed which is being accommodated in the container 2 of the dispenser 100.

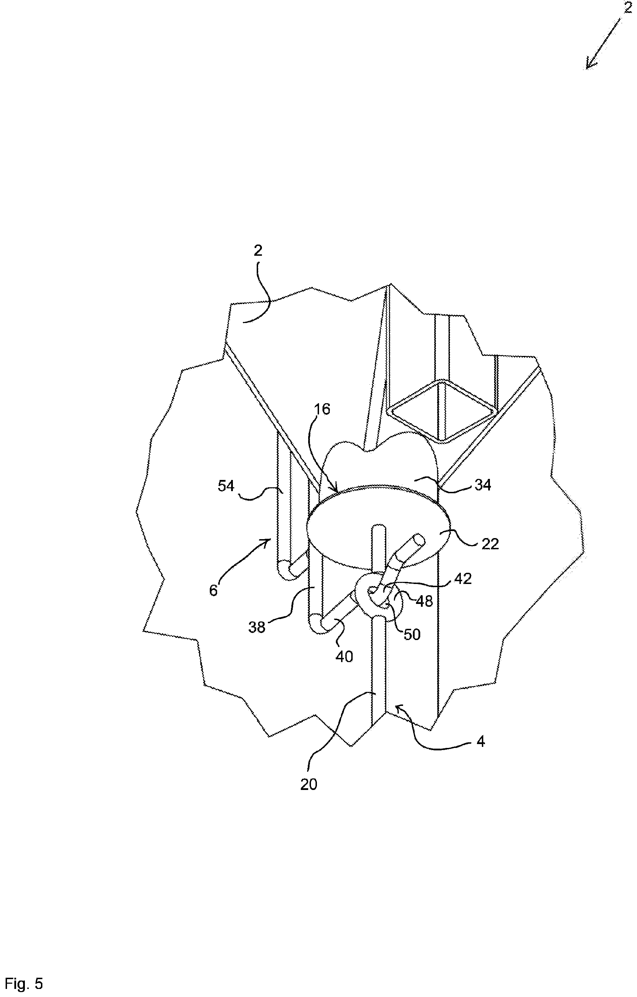

This arrangement of the dispensing pendulum 4 and the pendulum suspension 6 is illustrated in further detail in Fig. 5.

Fig. 5 is a close-up perspective view illustrating the suspension of the dispensing pendulum on the pendulum suspension according to one embodiment of the present invention.

Fig. 5 shows that the dispensing pendulum 4 comprises a vertically extending rod 20 at which upper end the retaining plate 22 is arranged.

Below the retaining plate the dispensing pendulum 4 comprises a ring 48 having a through-going opening 50.

Fig. 5 also illustrates that the pendulum suspension 6 comprises a vertically extending rod 38 having a 90° bend at a lower portion, thereby forming a horizontally extending lower end 40.

The horizontally extending lower end 40 of the pendulum suspension 6 comprises a holding element 42 for holding the dispensing pendulum 4. The holding element is formed by making the horizontally extending lower end 40 of the pendulum suspension 6 comprise a downward bend 44 followed by an upward bend 46.

It is seen that the dispensing pendulum 4 is suspended on the pendulum suspension by making the through-going opening 50 of the ring 48 rest on the holding element 42 of the horizontally extending lower end 40 of the pendulum suspension 6.

Allowing the dispensing pendulum 4 to pivot from side to side, such as effected by movement in the water or by fish bumping into the pendulum will imply dispensing fish feed from the first compartment 8 and the second compartment 10 out of the dispensing opening 16.

The exact vertical position of the retaining plate 22, which may be adjusted by adjusting the vertical position of the pendulum suspension 6, relative to the dispensing opening 16, will allow adjustment of the magnitude of the dispensed fish feed in response to a given movement of the dispensing pendulum 4.

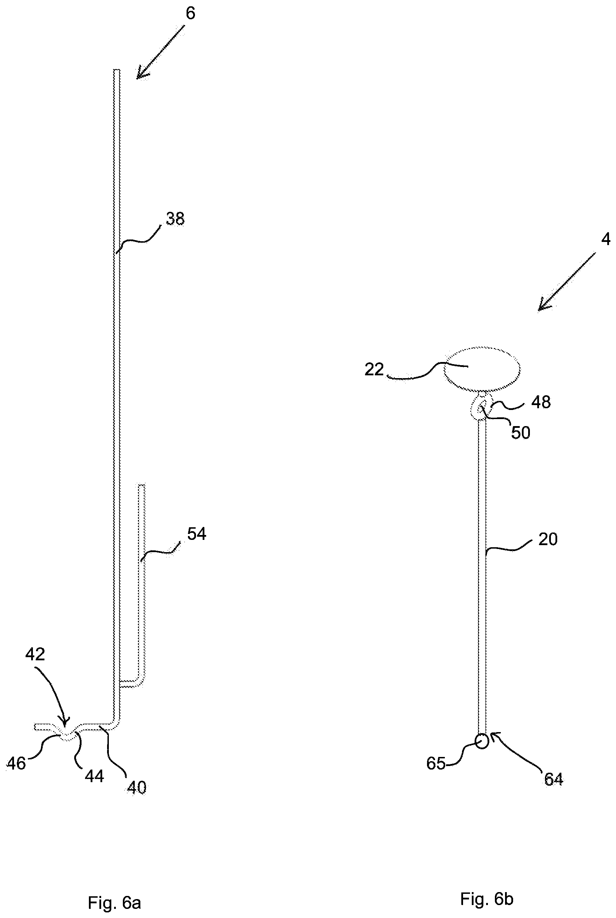

Fig. 6a is a perspective view illustrating a pendulum suspension to be used with the dispenser according to the present invention and Fig. 6b is a perspective view illustrating a dispensing pendulum to be used with the dispenser according to the present invention.

Fig. 6a shows the pendulum suspension 6 comprising the vertically extending rod 38 making a 90° bend at a lower portion, thereby forming a horizontally extending lower end 40 which comprises the holding element 42 for the dispensing pendulum 4.

Also shown in Fig. 6a is that the pendulum suspension 6 additionally comprises a guide arm 54. The rather long vertical extension of the vertically extending rod 38 and of the guide arm 54 allows for holding the orientation of the pendulum suspension 6 via a first guide member 52 and a second guide member 56, respectively, as seen in Fig. 1 and 4 respectively.

Fig. 6b illustrates that the dispensing pendulum 4 at a lower end comprises an end element 65 for providing increased volume of that lower end.

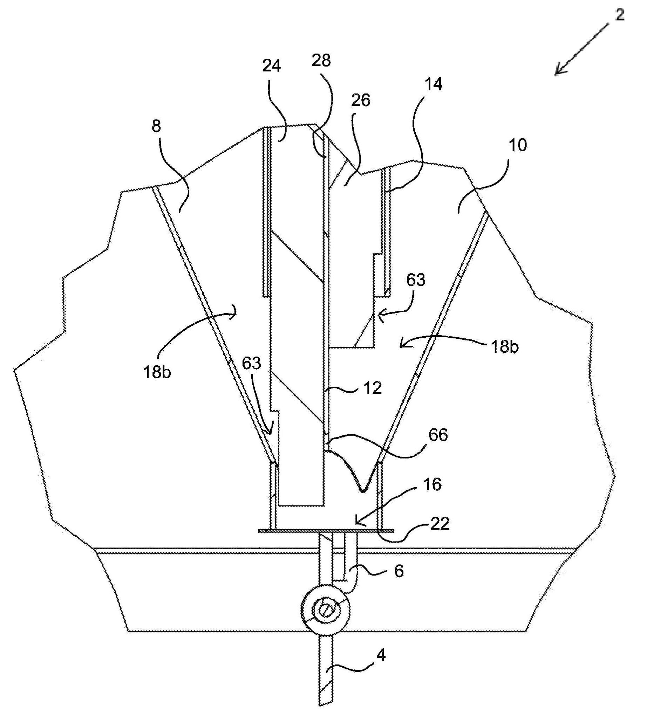

Fig. 7 is a close-up view illustrating the arrangement of the first dosing piston and the second dosing piston in the partitioning tube of the container of the dispenser according to the present invention.

Fig. 7 shows the container 2 comprising the first compartment 8 and the second compartment 10 which are separated by the partitioning wall and the partitioning tube 14.

It is clearly seen that the partitioning tube 14 is having an extension in a downward direction in a way that provides a passageway 18a from the first compartment 8 to the dispensing opening 16 is and in a way that provides a passageway 18b from the second compartment 10 to the dispensing opening 16.

This allows for adjusting the relative proportion of two types of granular fish feed to a predetermined value in respect of fish feed to be dispensed, when the first type of granular fish feed is being accommodated in the first compartment 8 and when the second type of granular fish feed is being accommodated in the second compartment 10.

This adjustment is performed by adjustment of the vertical position of the first dosing piston 24 relative to the partitioning tube 14 and/or by adjustment of the vertical position of the second dosing piston 26 relative to the partitioning tube 14.

As already mentioned, the total amount of granular feed being dispensed through the dispensing opening 16 of the dispenser 100, in response to a given amount of movement o pivoting of the dispensing pendulum, may be adjusted by adjusting the vertical position of the retaining plate 22 relative to the dispensing opening 16.

The following pellet sizes of fish feed has been found to be suitable in respect of most fish species being bred in a fish farm.

| **Weight of fish** | **Suitable pellet diameter of fish feed** |
|---|---|
| 50 - 200 g | 2 mm |
| 200 - 800 g | 4 mm |
| 800 g - 2500 g | 6 mm |
| >2000 g | 8 mm |

It should be understood that all features and achievements discussed above and in the appended claims in relation to one aspect of the present invention and embodiments thereof apply equally well to the other aspects of the present invention and embodiments thereof.

### List of reference numerals

- 2: Container of dispenser
- 4: Dispensing pendulum
- 6: Pendulum suspension
- 8: First compartment of container
- 10: Second compartment of container
- 12: Partitioning wall of container
- 14: Partitioning tube
- 16: Dispensing opening of container
- 18a: Passageway from first compartment to dispensing opening
- 18b: Passageway from second compartment to dispensing opening
- 20: Vertical rod of dispensing pendulum
- 22: Retaining plate of dispensing pendulum
- 24: First dosing piston
- 26: Second dosing piston
- 28: Vertically extending tube wall of partitioning tube
- 30: First inner portion of partitioning tube
- 32: Second inner portion of partitioning tube
- 34: Tube segment of dispensing opening
- 36a: Lower portion of first dosing piston
- 36b: Lower portion of first dosing piston
- 38: Vertically extending rod of pendulum suspension
- 40: Horizontally extending lower end of pendulum suspension
- 42: Holding element of pendulum suspension
- 44: Downward bend of horizontally extending lower end of pendulum suspension
- 46: Upward bend of horizontally extending lower end of pendulum suspension
- 48: Ring of dispensing pendulum
- 50: Through-going opening of ring
- 52: First guide member for vertically extending rod of pendulum suspension
- 54: Guide arm of pendulum suspension
- 56: Second guide member for guide arm of pendulum suspension
- 58: Dosage adjustment means
- 60: First locking means for locking vertical position of first dosing piston
- 62: Second locking means for locking vertical position of second dosing piston
- 63: Cutaway of dosing piston
- 64: Lowest end of dispensing pendulum
- 65: End element of dispensing pendulum
- 66: Passage between first compartment and second compartment
- 68: Handle of dosing piston
- 70: Lid of container
- 100: Dispenser

## Claims

1. A dispenser (100) for dispensing a mixture of two types of granular fish feed in a predetermined relative proportion;
wherein said dispenser in the orientation intended during use comprising:
- a container (2) for storing fish feed;
- a dispensing pendulum (4) for effecting the dosing of said fish feed;
- a pendulum suspension (6) for suspending said pendulum (4);
wherein said container (2) comprises a first compartment (8) and a second compartment (10), wherein said first compartment and said second compartment, at least at an upper portion thereof, are being separated by a partitioning wall (12) having an extension in a vertical direction;
wherein said first compartment (8) is being tapered in a downward direction and wherein said second compartment (10) is being tapered in a downward direction;
wherein said partitioning wall (12) comprises a partitioning tube (14) having an extension in a vertical direction;
wherein said container (2) at a position below said partitioning tube (14) thereof comprises a dispensing opening (16) for dispensing fish feed out of said container from said first compartment (8) and said second compartment (10) in a downward direction;
wherein said partitioning tube (14) is having the extension in a downward direction in such a way that a passageway (18a) from said first compartment (8) to said dispensing opening (16) is provided and in such a way that a passageway (18b) from said second compartment (10) to said dispensing opening (16) is provided;
wherein said dispensing pendulum (4) comprises a vertically extending rod (20) and a retaining plate (22) arranged at an upper portion thereof;
wherein said dispensing pendulum (4) is being coupled to said pendulum suspension in such a way that said retaining plate (22) of said dispensing pendulum is being arranged below said dispensing opening (16) outside said container (2), and in a way enabling said dispensing pendulum (4) to perform a pivoting movement when being acted upon by an external force;
wherein said dispenser comprises a first dosing piston (24) and a second dosing piston (26), wherein said first dosing piston and said second dosing piston are being accommodated in the interior of said partitioning tube (14) in an orientation parallel to each other;
wherein the dimensions and geometries of said partitioning tube (14) and of said first dosing piston (24) are adapted to each other in such a way that varying the vertical position of said first dosing piston relative to said partitioning tube will vary the magnitude of the passageway (18a) from said first compartment (8) to said dispensing opening (16);
wherein the dimensions and geometries of said partitioning tube (14) and of said second dosing piston (26) are adapted to each other in such a way that varying the vertical position of said second dosing piston (26) relative to said partitioning tube (14) will vary the magnitude of the passageway (18b) from said second compartment (10) to said dispensing opening (16).

2. A dispenser (100) according to claim 1, wherein said partitioning tube (14) in the interior thereof comprises a vertically extending tube wall (28) dividing the interior of said partitioning tube into a first inner portion (30) and a second inner portion (32); wherein the geometry and dimensions of said first inner portion (30) of said partitioning tube (14) and the geometry and dimensions of said first dosing piston (24) are adapted to each other in such a way that said first dosing piston is being accommodated in said first inner portion (30) of said partitioning tube (14); and wherein the geometry and dimensions of said second inner portion (32) of said partitioning tube (14) and the geometry and dimensions of said second dosing piston (26) are adapted to each other in such a way that said second dosing piston is being accommodated in said second inner portion (32) of said partitioning tube (14).

3. A dispenser (100) according to claim 1 or 2, wherein said dispensing opening (16) is comprising a tube segment (34) for receiving a lower portion (36a,36b) of said first dosing piston (24) and said second dosing piston (26), respectively;
optionally wherein said tube segment (34) is having a cross section corresponding to the cross section of said partitioning tube (14), and wherein said tube segment (34) of said dispensing opening (16) is being arranged directly below said partitioning tube (14).

4. A dispenser (100) according to any of the preceding claims, wherein the size of said retaining plate (22) of said dispensing pendulum (4) is sufficiently large to cover said dispensing opening (16).

5. A dispenser (100) according to any of the preceding claims, wherein said pendulum suspension (6) comprises a vertically extending rod (38) having a 90° bend at a lower portion, thereby forming a horizontally extending lower end (40), wherein said horizontally extending lower end of said pendulum suspension comprises a holding element (42) for holding said dispensing pendulum (4);
optionally wherein said holding element (42) of said horizontally extending lower end (40) of said pendulum suspension (6) comprises a downward bend (44) followed by an upward bend (46); and/or
optionally wherein said dispensing pendulum (4) at a position below said retaining plate (22) comprises a ring (48) having a through-going opening (50), and wherein said holding element (42) of said pendulum suspension (6) is configured for suspending said dispensing pendulum (4) by making said through-going opening (50) of said ring (48) rest on said holding element (42) of said horizontally extending lower end (40) of said pendulum suspension (6); and/or
optionally wherein said partitioning wall (12) of said container (2) comprises a first guide member (52) for holding in place the orientation of said vertically extending rod (38) of said pendulum suspension (6); and/or
optionally wherein said pendulum suspension comprises a guide arm (54) which is being connected to said vertically extending rod (38) and extending essentially parallel therewith in an upward direction, and wherein said dispenser comprises a second guide member (56) for holding in place the orientation of said guide arm (54) of said pendulum suspension (6).

6. A dispenser (100) according to any of the preceding claims, wherein said dispenser comprises dosage adjustment means (58) for adjusting the vertical position of said pendulum suspension (6) relative to said dispensing opening (16), wherein said dosage adjustment means (58) optionally also comprises locking means for locking the vertical position of said pendulum suspension (6) relative to said dispensing opening (16) and/or
wherein said dispenser comprises a first locking means (60) for locking the vertical position of said first dosing piston (24) relative to said partitioning tube (14); and/or wherein said dispenser comprises a second locking means (62) for locking the vertical position of said second dosing piston (26) relative to said partitioning tube (14).

7. A dispenser (100) according to any of the preceding claims, wherein the cross-section of the interior of said partitioning tube (14) is having a circular shape, and wherein the cross-section of said first dosing piston (24) and/or wherein the cross-section said second dosing piston (26) is/are having the shape of a semicircle;
optionally wherein in respect of a predetermined part of the lower end of said first dosing piston (24) and/or of said second dosing piston (26), said first dosing piston (24) and/or said second dosing piston (26) comprises a cutaway (63) of part of the cylindrical surface of the outer surface thereof.

8. A dispenser (100) according to any of the preceding claims, wherein the lowest end (64) of said dispensing pendulum (4) comprises an end element (65) for providing increased volume to said lowest end.

9. A dispenser (100) according to any of the preceding claims, wherein an extension, in a downward direction, of said partitioning wall (12) and of said partitioning tube (14) are configured in such a way that a passage (66) between said first compartment (8) and said second compartment (10) is being present below said partitioning wall (12) and below said partitioning tube (14).

10. A dispenser (100) according to any of the preceding claims, wherein said first dosing piston (24) and/or said second dosing piston (26) is/are comprising a handle (68) at its upper end; and/or
wherein said dispensing opening (16) of said container (2) is being arranged at the area of the lowest portion of said first compartment (8) and of said second compartment (10); and/or wherein said container (2) comprises a lid (70).

11. A dispenser according to any of the preceding claims, wherein said container (2) is having an inner volume of 50 - 1200 l or more, such as 75 - 1100 l, such as 100 - 1000 l, for example 200 - 900 1, e.g. 300 - 800 1, such as 400 - 700 1 or 500 - 600 1.

12. Use of a dispenser (100) according to any of the preceding claims for feeding fish.

13. Use according to claim 12 in a fish farm.

14. A method for feeding fish, such as fish in a fish farm, said method comprising the following steps:
i) providing a dispenser (100) according to any of the claims 1 - 11;
ii) arranging the dispenser (100) above water in the fish farm in which fish are to be fed in such a way that a lower part of said dispensing pendulum (4) is being submerged in the water;
iii) adding a first type of granular fish feed in said first compartment (8) of said dispenser and adding a second type of granular fish feed in said second compartment (10) of said dispenser;
iv) allowing said granular fish feed to be fed to the fish upon movement of said dispensing pendulum (4).

15. A method according to claim 14 further comprising one or more of the additional steps:
v) adjusting the vertical position of the pendulum suspension (6) in order to adjust the amount of feed to be fed to the fish; and/or
vi) adjusting the vertical position of said first dosing piston (24) relative to said partitioning tube (14) and/or adjusting the vertical position of said second dosing piston (26) relative to said partitioning tube (14) in order to adjust the proportion between the first type of feed and the second type of feed which are to be fed to said fish.

## Patentansprüche

1. Spender (100) zum Ausgeben einer Mischung aus zwei Arten von körnigem Fischfutter in einem vorbestimmten relativen Verhältnis;
wobei der Spender in der Ausrichtung, die während Verwendung vorgesehen ist, Folgendes umfasst:
- einen Behälter (2) zum Aufbewahren von Fischfutter;
- ein Ausgabependel (4) zum Bewirken des Dosierens des Fischfutters;
- eine Pendelaufhängung (6) zum Aufhängen des Pendels (4);
wobei der Behälter (2) eine erste Kammer (8) und eine zweite Kammer (10) umfasst, wobei die erste Kammer und die zweite Kammer mindestens an einem oberen Abschnitt davon durch eine Trennwand (12), die eine Erstreckung in einer vertikalen Richtung aufweist, getrennt sind;
wobei die erste Kammer (8) in einer Abwärtsrichtung verjüngt ist und wobei die zweite Kammer (10) in einer Abwärtsrichtung verjüngt ist;
wobei die Trennwand (12) ein Trennrohr (14), das eine Erstreckung in einer vertikalen Richtung aufweist, umfasst;
wobei der Behälter (2) an einer Position unterhalb des Trennrohrs (14) davon eine Ausgabeöffnung (16) zum Ausgeben von Fischfutter aus dem Behälter aus der ersten Kammer (8) und der zweiten Kammer (10) in einer Abwärtsrichtung umfasst;
wobei das Trennrohr (14) die Erstreckung in einer Abwärtsrichtung auf eine solche Weise, dass ein Durchgang (18a) von der ersten Kammer (8) zu der Ausgabeöffnung (16) bereitgestellt ist, und auf eine solche Weise, dass ein Durchgang (18b) von der zweiten Kammer (10) zu der Ausgabeöffnung (16) bereitgestellt ist, aufweist;
wobei das Ausgabependel (4) eine sich vertikal erstreckende Stange (20) und eine Rückhalteplatte (22), die an einem oberen Abschnitt davon angeordnet ist, umfasst;
wobei das Ausgabependel (4) auf eine solche Weise an die Pendelaufhängung gekoppelt ist, dass die Rückhalteplatte (22) des Ausgabependels unterhalb der Ausgabeöffnung (16) außerhalb des Behälters (2) angeordnet ist, und auf eine Weise, die es dem Ausgabependel (4) ermöglicht, eine Schwenkbewegung durchzuführen, wenn eine externe Kraft darauf wirkt;
wobei der Spender einen ersten Dosierkolben (24) und einen zweiten Dosierkolben (26) umfasst, wobei der erste Dosierkolben und der zweite Dosierkolben im Inneren des Trennrohrs (14) in einer Ausrichtung parallel zueinander untergebracht sind;
wobei die Abmessungen und Geometrien des Trennrohrs (14) und des ersten Dosierkolbens (24) auf eine solche Weise aneinander angepasst sind, dass ein Variieren der vertikalen Position des ersten Dosierkolbens relativ zu dem Trennrohr das Ausmaß des Durchgangs (18a) von der ersten Kammer (8) zu der Ausgabeöffnung (16) variiert;
wobei die Abmessungen und Geometrien des Trennrohrs (14) und des zweiten Dosierkolbens (26) auf eine solche Weise aneinander angepasst sind, dass ein Variieren der vertikalen Position des zweiten Dosierkolbens (26) relativ zu dem Trennrohr (14) das Ausmaß des Durchgangs (18b) von der zweiten Kammer (10) zu der Ausgabeöffnung (16) variiert.

2. Spender (100) nach Anspruch 1, wobei das Trennrohr (14) im Inneren davon eine sich vertikal erstreckende Rohrwand (28) umfasst, die das Innere des Trennrohrs in einen ersten inneren Abschnitt (30) und einen zweiten inneren Abschnitt (32) unterteilt; wobei die Geometrie und Abmessungen des ersten inneren Abschnitts (30) des Trennrohrs (14) und die Geometrie und Abmessungen des ersten Dosierkolbens (24) auf eine solche Weise aneinander angepasst sind, dass der erste Dosierkolben in dem ersten inneren Abschnitt (30) des Trennrohrs (14) untergebracht ist; und wobei die Geometrie und Abmessungen des zweiten inneren Abschnitts (32) des Trennrohrs (14) und die Geometrie und Abmessungen des zweiten Dosierkolbens (26) auf eine solche Weise aneinander angepasst sind, dass der zweite Dosierkolben in dem zweiten inneren Abschnitt (32) des Trennrohrs (14) untergebracht ist.

3. Spender (100) nach Anspruch 1 oder 2, wobei die Ausgabeöffnung (16) ein Rohrsegment (34) zum Aufnehmen eines unteren Abschnitts (36a,36b) des ersten Dosierkolbens (24) beziehungsweise des zweiten Dosierkolbens (26) umfasst;
wobei optional das Rohrsegment (34) einen Querschnitt aufweist, der dem Querschnitt des Trennrohrs (14) entspricht, und wobei das Rohrsegment (34) der Ausgabeöffnung (16) direkt unterhalb des Trennrohrs (14) angeordnet ist.

4. Spender (100) nach einem der vorhergehenden Ansprüche, wobei die Größe der Rückhalteplatte (22) des Ausgabependels (4) ausreichend groß ist, um die Ausgabeöffnung (16) abzudecken.

5. Spender (100) nach einem der vorhergehenden Ansprüche, wobei die Pendelaufhängung (6) eine sich vertikal erstreckende Stange (38) mit einer 90°-Biegung an einem unteren Abschnitt umfasst, wodurch ein sich horizontal erstreckendes unteres Ende (40) ausgebildet wird, wobei das sich horizontal erstreckende untere Ende der Pendelaufhängung ein Halteglied (42) zum Halten des Ausgabependels (4) umfasst;
wobei optional das Halteglied (42) des sich horizontal erstreckenden unteren Endes (40) der Pendelaufhängung (6) eine Abwärtsbiegung (44), gefolgt von einer Aufwärtsbiegung (46), umfasst; und/oder
wobei optional das Ausgabependel (4) an einer Position unterhalb der Rückhalteplatte (22) einen Ring (48) mit einer durchgehenden Öffnung (50) umfasst und wobei das Halteglied (42) der Pendelaufhängung (6) dazu konfiguriert ist, das Ausgabependel (4) aufzuhängen, indem bewirkt wird, dass die durchgehende Öffnung (50) des Rings (48) auf dem Halteglied (42) des sich horizontal erstreckenden unteren Endes (40) der Pendelaufhängung (6) ruht; und/oder
wobei optional die Trennwand (12) des Behälters (2) ein erstes Führungselement (52) zum Halten der Ausrichtung der sich vertikal erstreckenden Stange (38) der Pendelaufhängung (6) in Position umfasst; und/oder
wobei optional die Pendelaufhängung einen Führungsarm (54) umfasst, der mit der sich vertikal erstreckenden Stange (38) verbunden ist und sich im Wesentlichen parallel dazu in einer Aufwärtsrichtung erstreckt, und wobei der Spender ein zweites Führungselement (56) zum Halten der Ausrichtung des Führungsarms (54) der Pendelaufhängung (6) in Position umfasst.

6. Spender (100) nach einem der vorhergehenden Ansprüche, wobei der Spender ein Dosiseinstellmittel (58) zum Einstellen der vertikalen Position der Pendelaufhängung (6) relativ zu der Ausgabeöffnung (16) umfasst, wobei das Dosiseinstellmittel (58) optional auch Feststellmittel zum Feststellen der vertikalen Position der Pendelaufhängung (6) relativ zu der Ausgabeöffnung (16) umfasst und/oder
wobei der Spender ein erstes Feststellmittel (60) zum Feststellen der vertikalen Position des ersten Dosierkolbens (24) relativ zu dem Trennrohr (14) umfasst; und/oder wobei der Spender ein zweites Feststellmittel (62) zum Feststellen der vertikalen Position des zweiten Dosierkolbens (26) relativ zu dem Trennrohr (14) umfasst.

7. Spender (100) nach einem der vorhergehenden Ansprüche, wobei der Querschnitt des Inneren des Trennrohrs (14) eine kreisförmige Gestalt aufweist und wobei der Querschnitt des ersten Dosierkolbens (24) und/oder wobei der Querschnitt des zweiten Dosierkolbens (26) die Gestalt eines Halbkreises aufweist/aufweisen;
wobei optional der erste Dosierkolben (24) und/oder der zweite Dosierkolben (26) in Bezug auf einen vorbestimmten Teil des unteren Endes des ersten Dosierkolbens (24) und/oder des zweiten Dosierkolbens (26) einen Ausschnitt (63) eines Teils der zylindrischen Oberfläche der Außenoberfläche davon umfasst.

8. Spender (100) nach einem der vorhergehenden Ansprüche, wobei das unterste Ende (64) des Ausgabependels (4) ein Endglied (65) zum Bereitstellen eines vergrößerten Volumens für das unterste Ende umfasst.

9. Spender (100) nach einem der vorhergehenden Ansprüche, wobei eine Erstreckung der Trennwand (12) und des Trennrohrs (14) in einer Abwärtsrichtung auf eine solche Weise konfiguriert sind, dass ein Durchgang (66) zwischen der ersten Kammer (8) und der zweiten Kammer (10) unterhalb der Trennwand (12) und unterhalb des Trennrohrs (14) vorhanden ist.

10. Spender (100) nach einem der vorhergehenden Ansprüche, wobei der erste Dosierkolben (24) und/oder der zweite Dosierkolben (26) an seinem oberen Ende einen Griff (68) umfasst/umfassen; und/oder
wobei die Ausgabeöffnung (16) des Behälters (2) im Bereich des untersten Abschnitts der ersten Kammer (8) und der zweiten Kammer (10) angeordnet ist; und/oder
wobei der Behälter (2) einen Deckel (70) umfasst.

11. Spender nach einem der vorhergehenden Ansprüche, wobei der Behälter (2) ein Innenvolumen von 50 - 1200 l oder mehr, wie 75 - 1100 l, wie 100 - 1000 l, beispielsweise 200 - 900 1, z. B. 300 - 800 l, wie 400 - 700 1 oder 500 - 600 1, aufweist.

12. Verwendung eines Spenders (100) nach einem der vorhergehenden Ansprüche zum Füttern von Fischen.

13. Verwendung nach Anspruch 12 in einer Fischzuchtanlage.

14. Verfahren zum Füttern von Fischen, wie Fischen in einer Fischzuchtanlage, wobei das Verfahren die folgenden Schritte umfasst:
i) Bereitstellen eines Spenders (100) nach einem der Ansprüche 1 - 11;
ii) Anordnen des Spenders (100) über Wasser in der Fischzuchtanlage, in der Fische auf eine solche Weise zu füttern sind, dass ein unterer Teil des Ausgabependels (4) in das Wasser getaucht wird;
iii) Hinzufügen einer ersten Art von körnigem Fischfutter in die erste Kammer (8) des Spenders und Hinzufügen einer zweiten Art von körnigem Fischfutter in die zweite Kammer (10) des Spenders;
iv) Zulassen, dass das körnige Fischfutter den Fischen bei Bewegung des Ausgabependels (4) gefüttert wird.

15. Verfahren nach Anspruch 14, ferner umfassend einen oder mehrere der zusätzlichen Schritte:
v) Einstellen der vertikalen Position der Pendelaufhängung (6), um die Menge an Futter, die den Fischen zu füttern ist, einzustellen; und/oder
vi) Einstellen der vertikalen Position des ersten Dosierkolbens (24) relativ zu dem Trennrohr (14) und/oder Einstellen der vertikalen Position des zweiten Dosierkolbens (26) relativ zu dem Trennrohr (14), um das Verhältnis zwischen der ersten Art von Futter und der zweiten Art von Futter, die den Fischen zu füttern sind, einzustellen.

## Revendications

1. Distributeur (100) destiné à la distribution d'un mélange de deux types d'aliments granulaires pour poissons dans une proportion relative prédéfinie ;
ledit distributeur dans l'orientation prévue durant l'utilisation comprenant :
- un récipient (2) destiné au stockage d'aliments pour poissons ;
- un pendule de distribution (4) pour effectuer le dosage desdits aliments pour poissons ;
- une suspension (6) de pendule destinée à suspendre ledit pendule (4) ;
ledit récipient (2) comprenant un premier compartiment (8) et un second compartiment (10), ledit premier compartiment et ledit second compartiment, au moins au niveau d'une partie supérieure de ceux-ci, étant séparés par une paroi de séparation (12) possédant une extension dans une direction verticale ;
ledit premier compartiment (8) étant conique dans une direction descendante et ledit second compartiment (10) étant conique dans une direction descendante ;
ladite paroi de séparation (12) comprenant un tube de séparation (14) possédant une extension dans une direction verticale ;
ledit récipient (2) au niveau d'une position en dessous dudit tube de séparation (14) de celui-ci comprenant une ouverture de distribution (16) en vue de la distribution d'aliments pour poissons hors dudit récipient à partir dudit premier compartiment (8) et dudit second compartiment (10) dans une direction descendante ;
ledit tube de séparation (14) possédant l'extension dans une direction descendante d'une façon telle qu'un passage (18a) allant dudit premier compartiment (8) à ladite ouverture de distribution (16) soit prévu et d'une façon telle qu'un passage (18b) allant dudit second compartiment (10) à ladite ouverture de distribution (16) soit prévu ;
ledit pendule de distribution (4) comprenant une tige s'étendant verticalement (20) et une plaque de retenue (22) agencée au niveau d'une partie supérieure de celle-ci ;
ledit pendule de distribution (4) étant couplé à ladite suspension de pendule d'une façon telle que ladite plaque de retenue (22) dudit pendule de distribution soit agencée en dessous de ladite ouverture de distribution (16) à l'extérieur dudit récipient (2), et d'une façon permettant audit pendule de distribution (4) de réaliser un mouvement de pivotement lorsqu'il est soumis à une force extérieure ; ledit distributeur comprenant un premier piston de dosage (24) et un second piston de dosage (26), ledit premier piston de dosage et ledit second piston de dosage étant reçus à l'intérieur dudit tube de séparation (14) dans une orientation parallèle l'un à l'autre ;
lesdites dimensions et géométries dudit tube de séparation (14) et dudit premier piston de dosage (24) étant adaptées les unes aux autres d'une façon telle que la variation de la position verticale dudit premier piston de dosage par rapport audit tube de séparation fasse varier l'amplitude du passage (18a) entre ledit premier compartiment (8) et ladite ouverture de distribution (16) ;
lesdites dimensions et géométries dudit tube de séparation (14) et dudit second piston de dosage (26) étant adaptées les unes aux autres d'une façon telle que la variation de la position verticale dudit second piston de dosage (26) par rapport audit tube de séparation (14) fasse varier l'amplitude du passage (18b) allant dudit second compartiment (10) à ladite ouverture de distribution (16).

2. Distributeur (100) selon la revendication 1, ledit tube de séparation (14) à l'intérieur de celui-ci comprenant une paroi de tube s'étendant verticalement (28) divisant l'intérieur dudit tube de séparation en une première partie interne (30) et une seconde partie interne (32) ; ladite géométrie et lesdites dimensions de ladite première partie interne (30) dudit tube de séparation (14) et ladite géométrie et lesdites dimensions dudit premier piston de dosage (24) étant adaptées les unes aux autres d'une façon telle que ledit premier piston de dosage soit reçu dans ladite première partie interne (30) dudit tube de séparation (14) ; et ladite géométrie et lesdites dimensions de ladite seconde partie interne (32) dudit tube de séparation (14) et ladite géométrie et lesdites dimensions dudit second piston de dosage (26) étant adaptées les unes aux autres d'une façon telle que ledit second piston de dosage soit reçu dans ladite seconde partie interne (32) dudit tube de séparation (14).

3. Distributeur (100) selon la revendication 1 ou 2, ladite ouverture de distribution (16) comprenant un segment de tube (34) pour recevoir une partie inférieure (36a, 36b) dudit premier piston de dosage (24) et dudit second piston de dosage (26), respectivement ;
éventuellement, ledit segment de tube (34) possédant une section transversale correspondant à la section transversale dudit tube de séparation (14), et ledit segment de tube (34) de ladite ouverture de distribution (16) étant agencé directement en dessous dudit tube de séparation (14).

4. Distributeur (100) selon l'une quelconque des revendications précédentes, ladite taille de ladite plaque de retenue (22) dudit pendule de distribution (4) étant suffisamment grande pour couvrir ladite ouverture de distribution (16).

5. Distributeur (100) selon l'une quelconque des revendications précédentes, ladite suspension (6) de pendule comprenant une tige s'étendant verticalement (38) possédant une courbure de 90° au niveau d'une partie inférieure, formant ainsi une extrémité inférieure s'étendant horizontalement (40), ladite extrémité inférieure s'étendant horizontalement de ladite suspension de pendule comprenant un élément de maintien (42) pour maintenir ledit pendule de distribution (4) ;
éventuellement ledit élément de maintien (42) de ladite extrémité inférieure s'étendant horizontalement (40) de ladite suspension (6) de pendule comprenant un coude vers le bas (44) suivi d'un coude vers le haut (46) ; et/ou
éventuellement ledit pendule de distribution (4) au niveau d'une position en dessous de ladite plaque de retenue (22) comprenant un anneau (48) possédant une ouverture traversante (50), et ledit élément de maintien (42) de ladite suspension (6) de pendule étant conçu pour suspendre ledit pendule de distribution (4) en amenant ladite ouverture traversante (50) dudit anneau (48) à reposer sur ledit élément de maintien (42) de ladite extrémité inférieure s'étendant horizontalement (40) de ladite suspension (6) de pendule ; et/ou éventuellement ladite paroi de séparation (12) dudit récipient (2) comprenant un premier élément de guidage (52) pour maintenir en place l'orientation de ladite tige s'étendant verticalement (38) de ladite suspension (6) de pendule ; et/ou
éventuellement ladite suspension de pendule comprenant un bras de guidage (54) qui est relié à ladite tige s'étendant verticalement (38) et s'étendant essentiellement parallèle à celle-ci dans une direction vers le haut, et ledit distributeur comprenant un second élément de guidage (56) pour maintenir en place l'orientation dudit bras de guidage (54) de ladite suspension (6) de pendule.

6. Distributeur (100) selon l'une quelconque des revendications précédentes, ledit distributeur comprenant des moyens de réglage de dosage (58) pour régler la position verticale de ladite suspension (6) de pendule par rapport à ladite ouverture de distribution (16), lesdits moyens de réglage de dosage (58) comprenant aussi éventuellement des moyens de verrouillage pour verrouiller la position verticale de ladite suspension (6) de pendule par rapport à ladite ouverture de distribution (16) et/ou
ledit distributeur comprenant un premier moyen de verrouillage (60) pour verrouiller la position verticale dudit premier piston de dosage (24) par rapport audit tube de séparation (14) ; et/ou ledit distributeur comprenant un second moyen de verrouillage (62) pour verrouiller la position verticale dudit second piston de dosage (26) par rapport audit tube de séparation (14).

7. Distributeur (100) selon l'une quelconque des revendications précédentes, ladite section transversale de l'intérieur dudit tube de séparation (14) possédant une forme circulaire, et ladite section transversale dudit premier piston de dosage (24) et/ou ladite section transversale dudit second piston de dosage (26) possédant la forme d'un demi-cercle ;
éventuellement, en ce qui concerne une partie prédéfinie de l'extrémité inférieure dudit premier piston de dosage (24) et/ou dudit second piston de dosage (26), ledit premier piston de dosage (24) et/ou ledit second piston de dosage (26) comprenant une découpe (63) d'une partie de la surface cylindrique de la surface externe de celui-ci.

8. Distributeur (100) selon l'une quelconque des revendications précédentes, ladite extrémité la plus basse (64) dudit pendule de distribution (4) comprenant un élément d'extrémité (65) pour fournir un volume accru à ladite extrémité la plus basse.

9. Distributeur (100) selon l'une quelconque des revendications précédentes, une extension, dans une direction descendante, de ladite paroi de séparation (12) et dudit tube de séparation (14) étant conçue d'une façon telle qu'un passage (66) entre ledit premier compartiment (8) et ledit second compartiment (10) soit présent en dessous de ladite paroi de séparation (12) et en dessous dudit tube de séparation (14).

10. Distributeur (100) selon l'une quelconque des revendications précédentes, ledit premier piston de dosage (24) et/ou ledit second piston de dosage (26) comprenant une poignée (68) au niveau de son extrémité supérieure ; et/ou
ladite ouverture de distribution (16) dudit récipient (2) étant agencée au niveau de la zone de la partie la plus basse dudit premier compartiment (8) et dudit second compartiment (10) ; et/ou
ledit récipient (2) comprenant un couvercle (70).

11. Distributeur selon l'une quelconque des revendications précédentes, ledit récipient (2) possédant un volume interne supérieur ou égal à 50 à 1200 l, tel que 75 à 1100 l, tel que 100 à 1000 l, par exemple 200 à 900 l, par exemple 300 à 800 l, tel que 400 à 700 1 ou 500 à 600 1.

12. Utilisation d'un distributeur (100) selon l'une quelconque des revendications précédentes pour l'alimentation des poissons.

13. Utilisation selon la revendication 12 dans une ferme piscicole.

14. Procédé permettant l'alimentation de poissons, tels que des poissons dans une ferme piscicole, ledit procédé comprenant les étapes suivantes :
i) fourniture d'un distributeur (100) selon l'une quelconque des revendications 1 à 11 ;
ii) agencement du distributeur (100) au-dessus de l'eau dans la ferme piscicole dans laquelle les poissons doivent être alimentés d'une façon telle qu'une partie inférieure dudit pendule de distribution (4) soit immergée dans l'eau ;
iii) ajout d'un premier type d'aliments granulaires pour poissons dans ledit premier compartiment (8) dudit distributeur et l'ajout d'un second type d'aliments granulaires pour poissons dans ledit second compartiment (10) dudit distributeur ;
iv) autorisation de donner lesdites aliments granulaires pour poissons aux poissons lors du mouvement dudit pendule de distribution (4).

15. Procédé selon la revendication 14, comprenant en outre une ou plusieurs des étapes supplémentaires :
v) réglage de la position verticale de la suspension (6) de pendule afin de régler la quantité d'aliments devant être donnés aux poissons ; et/ou
vi) réglage de la position verticale dudit premier piston de dosage (24) par rapport audit tube de séparation (14) et/ou réglage de la position verticale dudit second piston de dosage (26) par rapport audit tube de séparation (14) afin de régler la proportion entre le premier type d'aliment et le second type d'aliment qui doivent être donnés auxdits poissons.
